(19)

**Europäisches Patentamt**
**European Patent Office**
**Office européen des brevets**

(11) **EP 4 438 631 A1**

(12) **EUROPEAN PATENT APPLICATION**

(43) Date of publication:
**02.10.2024 Bulletin 2024/40**

(21) Application number: **23165162.1**

(22) Date of filing: **29.03.2023**

(51) International Patent Classification (IPC):
***C08B 37/00*** *(2006.01)* ***C08L 5/00*** *(2006.01)*

(52) Cooperative Patent Classification (CPC):
**C08B 37/0003; C08B 37/0054; C08L 5/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Cosucra Groupe Warcoing S.A.
7740 Warcoing (BE)**

(72) Inventors:
• **FOUGNIES, Christian
7600 Péruwelz (BE)**
• **DEFROMONT, Miguel
7911 Frasnes-Lez-Buissenal (BE)**

(74) Representative: **De Clercq & Partners
Edgard Gevaertdreef 10a
9830 Sint-Martens-Latem (BE)**

(54) **METHODS FOR STORING AN INULIN JUICE**

(57) The invention concerns a method for storing an inulin juice, the method comprising the steps of: (a) providing an inulin juice at a temperature of about 80°C to about 100°C, wherein the inulin juice has a solids content of 20% by weight to 60% by weight; (b) cooling the inulin juice in a crystallization tank to a temperature of at most about 40°C at an average cooling speed of from 0.4°C per hour to 20°C per hour, wherein the inulin juice is subjected to stirring during the cooling step; (c) transporting the inulin juice from the crystallization tank to a storage tank; and (d) maintaining the inulin juice in the storage tank at a temperature of at most about 40°C. After storage, the inulin juice can advantageously be used for the preparation of one or more of a native inulin product, a long chain inulin product, or a short chain inulin product.

EP 4 438 631 A1

**Description**

**FIELD OF THE INVENTION**

The invention is broadly in the field of healthy and sustainable food ingredients, more precisely in the field of fibre extracted from chicory roots useful for a wide range of food applications and dietary supplements. In particular, the invention concerns methods for the efficient storage and sustainable manufacture of chicory root fibers.

**BACKGROUND OF THE INVENTION**

Dietary fibers are edible carbohydrates, which are neither digested nor absorbed in the human small intestine and which have been obtained from food material by physical, enzymatic or chemical means and which have a beneficial physiological effect. In general, dietary fibers pass through much of the digestive system intact and may be totally or partially fermented by the intestinal microbiota.

Dietary fibers may be water soluble or water insoluble. Among the water soluble dietary fibers are fructans. Fructans essentially are polymers composed of fructose residues, ending or not with a glucose unit at what would otherwise be the reducing end. The linkage position of the fructose residues determines the type of the fructan. Linkage normally occurs at one of the two primary hydroxyls (OH-1 or OH-6), and there are two basic types of simple fructan: inulin (the fructosyl residues are linked by $\beta$-2,1-linkages) and levan (the fructosyl residues are linked by $\beta$-2,6-linkages). Fructans can be found in many plants as well as microorganisms, where they are stored as a form of energy. For instance inulin is produced in particularly high quantities in chicory roots.

Industrial production of inulin from for instance chicory root typically involves extraction by hot water and removal of extracted plant material. This method produces an inulin juice, also referred to as raw inulin juice, or extract rich in inulin. Free sugars (for instance glucose, fructose and sucrose) are also co-extracted, along with other impurities (e.g. salts, proteins, etc.). The exact composition of for instance chicory root inulin rich extracts varies and depends on the growing conditions, harvest date, variety of chicory, etc.

The method for purifying the inulin rich extract typically contains several steps, including for instance liquid/solid separation, ion exchange, activated carbon filtration (i.e., carbon filtering), etc. in which the majority of impurities are removed, and an inulin rich composition including free sugars is obtained.

In order to reduce the environmental impact, chicory roots are grown in the region of the manufacture plant. For example in the Western European area, chicory roots can be harvested from September to January. In order to extend the period of inulin processing and refining, chicory roots can be dried prior to processing and refining for instance by sun drying of chicory roots or sliced chicory roots, or by oven drying. Alternatively, it is also possible to spray dry raw inulin extracts in order to refine them later. However, these methods are only valid for small quantities of chicory roots (e.g. sun drying) or require oil or gas (e.g. oven drying, spray drying) and are thus expensive. In view thereof, there remains a need in the art for further and/or improved methods for the efficient storage of chicory roots or chicory root extracts and for sustainable manufacture of chicory root fibers.

**SUMMARY OF THE INVENTION**

The present inventors have found a method for storing an inulin juice, thereby addressing one or more of the above-mentioned problems in the art.

Accordingly, a first aspect of the invention relates to a method for storing an inulin juice, the method comprising the steps of: (a) providing an inulin juice at a temperature of about 80°C to about 100°C in a crystallization tank, wherein the inulin juice has a solids content of 20% by weight to 60% by weight, with % by weight based on the total weight of the inulin juice; (b) cooling the inulin juice in the crystallization tank to a temperature of at most about 40°C, such as from about - 6°C to about 40°C, at an average cooling speed of from 0.4°C per hour to 20°C per hour, wherein the inulin juice is subjected to stirring during the cooling step; (c) transporting the inulin juice from the crystallization tank to a storage tank; and (d) maintaining the inulin juice in the storage tank at a temperature of at most about 40°C.

Preferably, an aspect of the invention provides a method for storing an inulin juice, the method comprising the steps of: (a) providing an inulin juice at a temperature of about 80°C to about 100°C in a crystallization tank, wherein the inulin juice has a solids content of 20% by weight to 60% by weight, with % by weight based on the total weight of the inulin juice; (b) cooling the inulin juice in the crystallization tank to a temperature of at most about 40°C, such as from about -6°C to about 40°C, at an average cooling speed of from 0.4°C per hour to 20°C per hour, wherein the inulin juice is subjected to stirring during the cooling step, thereby obtaining an inulin juice in which at least 50% of the crystallizable carbohydrates is crystallized; (c) transporting the inulin juice from the crystallization tank to a storage tank; and (d) maintaining the inulin juice in the storage tank at a temperature of at most about 40°C.

The present inventors have realized that the present method facilitates storage of inulin juice to extend the refining period. Further, the present method allows the storage of inulin juice in a cost effective manner. The inventors have found that a controlled crystallization step before storage by cooling of an inulin juice having a solids content of 20% to 60% by weight at a slow rate of cooling and under stirring provides for an efficient and hence cost effective crystallisation with particle morphologies which are different from those formed during uncontrolled crystallization occurring during the mere storage under cooling of an inulin juice. Due to controlled crystallization, the present method avoids gel formation of the inulin juice, thereby retaining the ability of the inulin juice to be pumped and further processed. The present method thus allows long term and easy storage of inulin juice, thereby permitting all year round processing (not only from September to February) of inulin juice independently of the growing season of chicory roots, while allowing to satisfactory process the inulin juice after storage. Advantageously, after storage the inulin juice can be used for the preparation of a native inulin product, a long chain inulin product, or a short chain inulin product.

Furthermore, the present method allows low cost storage of inulin juice as compared to oven drying the chicory roots or spray drying inulin juice. According to calculations, drying of a raw chicory juice by atomization has an energy cost which is about 10 times higher than the energy cost of the present method. The investment costs are also much lower when using the present method.

Moreover, the present inventors have surprisingly found that the present method allows to homogenize the production of inulin products and efficiently allows to prepare inulin products complying with particular specifications. Chicory roots at the beginning of the harvesting season typically contain a high amount of long chain inulin and almost no free sugars, e.g., about 3% by weight of free sugars (glucose, fructose, sucrose) based on dry weight of the inulin juice. However, at the end of the harvesting season, the amount of free sugars of the chicory roots is much higher, such as above 10% by weight up to even 20% by weight of free sugars based on dry weight of the inulin juice, while the amount of long chain inulin is lower. Since inulin products such as native inulin is sold having particular specifications such as a maximum amount of free sugars of 10% by weight, the present method advantageously allows mixing stored inulin juices, for example blending stored inulin juice of the start of the harvesting season with inulin juice of the end of the harvesting season, thereby preparing an inulin product complying with particular specifications with respect to the free sugars content. Furthermore, the present method allows to prevent cut-offs and avoids having to discard inulin products falling outside the required specifications.

In addition, at the beginning of the chicory roots harvesting season, the inulin juice typically contains more long chains type inulin which are known to have a relatively low solubility. This inulin will undergo fast crystallization during the concentration preceding the spray drying which is problematic for this drying step. This phenomenon limits the solid content of the juice to be spray dried to 40% for example. On the other hand, inulin juice obtained at the end of the harvesting season contains relatively shorter inulin chains with a higher solubility. Mixing the juice obtained at the beginning of the harvesting season with juice obtained at the end of the season allows to increase the solid content of the juice to be spray dried to 50% or even higher thus allowing to spray dry the inulin juice in a more cost efficient and energy saving manner.

Hence, the present method advantageously allows to prepare inulin products in an efficient and sustainable way.

The above and further aspects and preferred embodiments of the invention are described in the following sections and in the appended claims. The subject-matter of appended claims is hereby specifically incorporated in this specification.

## DESCRIPTION OF THE DRAWINGS

**Figure 1** represents graphs illustrating cooling profiles for cooling the inulin juice in a crystallisation tank in a method according to an embodiment of the invention. A: cooling profile according to Example 1; B: cooling profile according to an embodiment of the invention; C: cooling profile according to an embodiment of the invention.

**Figure 2** represents a photograph showing an example of particles obtained by a method according to an embodiment of the invention (Scale: 10 $\mu$m).

## DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of and from the specified value, in particular variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Whereas the term "one or more", such as one or more members of a group of members, is clear per se, by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

All documents cited in the present specification are hereby incorporated by reference in their entirety.

Unless otherwise specified, all terms used in disclosing the invention, including technical and scientific terms, have the meaning as commonly understood by one of ordinary skill in the art to which this invention belongs. By means of further guidance, term definitions may be included to better appreciate the teaching of the present invention.

The present inventors have found that the controlled crystallisation of inulin juice before storage allows extended storage while maintaining the subsequent processability of the inulin juice. Accordingly, the present method permits to extend the refining of inulin juice outside the harvesting period to all year round. Moreover, the present method allows to mix different types of inulin juices (e.g. having different degree of polymerization and free sugar content) to comply with particular specifications, avoid cut-offs, and increase the dry matter content of inulin juices for drying.

A first aspect of the invention relates to a method for storing an inulin juice, the method comprising the steps of:

(a) providing an inulin juice at a temperature of about 80°C to about 100°C in a crystallization tank;

(b) cooling the inulin juice in the crystallization tank to a temperature of at most about 40°C at an average cooling speed of from 0.4°C per hour to 20°C per hour, wherein the inulin juice is subjected to stirring during the cooling step;

(c) transporting the inulin juice from the crystallization tank to a storage tank; and

(d) maintaining the inulin juice in the storage tank at a temperature of at most about 40°C. Preferably, the inulin juice has a solids content of at most 60% by weight, such as wherein the inulin juice has a solids content of 20% by weight to 60% by weight, with % by weight based on the total weight of the inulin juice.

The methods as taught herein are preferably performed on an industrial scale. The term "industrial scale" as used herein refers to a method which is carried out in an installation that can process at least 100 ton of raw material per day (24 hours). For instance, in an industrial method as taught herein at least 100 ton raw material (e.g., inulin containing material) is processed per day, such as at least 250 ton raw material (e.g., inulin containing material), at least 500 ton raw material, at least 750 ton raw material, at least 1000 ton raw material, or more such as at least 2000 ton or at least 3000 ton raw material is processed per day.

The methods as taught herein comprise the step (a) of providing an inulin juice at a temperature of about 80°C to about 100°C. In embodiments, the methods as taught herein comprise providing an inulin juice at a temperature of about 81°C to about 99°C, about 82°C to about 98°C, about 83°C to about 97°C, about 84°C to about 96°C, about 85°C to about 95°C, about 90°C to about 100°C, about 95°C to about 100°C, or about 99°C to about 100°C. Such temperature allows the inulin juice to enter the crystallization tank under the boiling point of the inulin juice (e.g. at about 1 atm of pressure).

Prior to step (a), the methods as taught herein may comprise the step of providing an inulin containing material such as chicory roots.

As used herein, the term "inulin" refers to a mixture of oligo- and/or polysaccharides of fructose which may have a terminal glucose. Inulins belong to a class of fibers known as fructans. In an embodiment, inulin can be represented, depending from the terminal carbohydrate unit, by the general formulae $GF_n$ and/or $F_m$, wherein G represents a glucose unit, F represents a fructose unit, n is an integer representing the number of fructose units linked to the terminal glucose unit, and m is an integer representing the number of fructose units linked to each other in the carbohydrate chain, preferably wherein n is at least 2, and m is at least 2. Inulins as taught herein encompass inulins with a terminal glucose which are also referred as alpha-D-glucopyranosyl-[beta-D-fructofuranosyl](n-1)-D-fructofuranosides, as well as inulins without glucose which are also referred as beta-D-fructopyranosyl-[D-fructofuranosyl](n-1)-D-fructofuranosides. Suitable saccharide chains of inulin from plant origin as taught herein can have a DP ranging from 2 to about 100. Inulin can be a liquid or a powder product.

As used herein, the terms "degree of polymerization" or "DP" relates to the number of monosaccharide residues present in an oligo- or polysaccharide. Often also the parameter average degree of polymerization is used. The degree of polymerization is a measure of molecular weight (MW). The DP can be calculated as the ratio of the total MW of the polymer or oligomer and the MW of the repeating units.

The average degree of polymerization (av DP) of a (polydispersed) oligo- or polysaccharide mixture is the mean of the degree of polymerization (DP) of all the molecules present in the saccharide mixture. The average degree of polymerization herein, unless otherwise specified, is calculated based on the number of molecules for each DP: av DPn or average degree of polymerization by number as described herein below.

Determination of the molecular mass distribution of the inulin sample is done by High Performance Anion Exchange Chromatography coupled with Pulse Amperometric Detection (HPAEC-PAD) on a Thermofisher-Dionex ICS 5000 chromatographic system. Separation of the various chain lengths is achieved by a Carbopac PA100 2mm *250 mm (+ guard) at 30°C with a flow rate of 0.25 ml/min. Sodium hydroxide 160 mM is used as eluent. A gradient of sodium acetate during the run allows to separate the various chain lengths.

Inulin mixture standards at different concentrations are injected in order to draw the calibration curves and to assign the peaks in the chromatogram based on the retention time of the standard. The calibration curves allow determining the concentration of each molecular species in the sample.

From the obtained concentration distribution, the average polymerization degree in number $\overline{Dp_n}$ is calculated as

$$\overline{Dp_n} = \frac{\sum_i N_i Dp_i}{\sum_i N_i}$$

Where Ni is the number of molecules having i residue and Dpi the number of residue.

In embodiments, the inulin juice may comprise inulin having an average degree of polymerization (DP) between 5 and 18. In embodiments, the inulin juice may comprise inulin having an average degree of polymerization between 5 and 10. In embodiments, the inulin juice may comprise inulin having an average degree of polymerization between 11 and 18.

In an embodiment, the inulin such as the inulin juice as taught herein has an average DP by number of at least 5. In an embodiment, the inulin has an average DP by number of at most 18. In an embodiment, the inulin such as the inulin juice as taught herein has an average DP by number of at least 6, for example of at least 7, for example of at least 8, for example of at least 9, or for example of at least 10. In an embodiment, the inulin such as the inulin juice as taught herein has an average DP by number of at least 5 and of at most 18, preferably of at least 5 and at most 16, more preferably of at least 6 and of at most 14. In a further preferred embodiment, the inulin comprises or consists of fructooligosaccharides (FOS). In a further preferred embodiment, the inulin has an average DP by number of at least 5 and at most 14, preferably of at least 5 and at most 12, such as of at least 5 and at most 10. In yet another preferred embodiment, the inulin comprises or consists of partially hydrolyzed inulin. Hydrolyzed inulin may for instance be obtained enzymatically (e.g. by inulinase) or may alternatively be obtained by acid and/or thermal hydrolysis.

In an embodiment, the inulin as described herein is derived from or isolated from plants, i.e. it is of plant origin, preferably from chicory (*Cichorium intybus*).

In an embodiment, the inulin juice is obtained by hot water extraction. In a preferred embodiment, industrial production of inulin from for instance chicory root involves extraction by hot water. However, free sugars (such as glucose, fructose and sucrose) are co-extracted.

As used herein, the term "free sugars" refers to monosaccharides and/or disaccharides. Free sugars may for instance be present in plants, plant material, or plant homogenates, extracts, or isolates, or fractionated plant material. In an embodiment, the term "free sugars" as used herein refers to hexose mono- or di-saccharides, preferably hexose mono- or di-saccharides. Preferably, the term "free sugars" encompasses fructose, glucose, and sucrose (saccharose). Accordingly, in an embodiment, free sugars comprise or consist or consist essentially of fructose. In another embodiment, free sugars comprise or consist or consist essentially of glucose. In yet another embodiment, free sugars comprise or consist or consist essentially of sucrose. In a further embodiment, free sugars comprise or consist of fructose and glucose. In yet another embodiment, free sugars comprise or consist or consist essentially of fructose and sucrose. In another embodiment, free sugars comprise or consist or consist essentially of glucose and sucrose. In yet a further embodiment, free sugars comprise or consist or consist essentially of fructose, glucose, and sucrose.

As used herein, the term "inulin juice" refers to any type of liquid composition which comprises inulin and optionally free sugars and/or impurities. Preferably, the inulin juice is an aqueous composition (i.e. a composition comprising water and a certain amount of inulin, dissolved and/or dispersed therein). The inulin juice may be obtained by homogenizing for instance plant material. Preferably, the inulin juice as described herein refer to extracts, which are enriched in inulin compared to the source material it is derived from. Inulin extraction may for instance involve putting plant material in hot water followed by concentration (e.g. evaporation).

In embodiments, the inulin juice provided in the methods as taught herein may have a solids content of at most 60% by weight, with % by weight based on the total weight of the inulin juice. For instance, the inulin juice provided in the methods as taught herein may have a solids content of at most 55% by weight, at most 50% by weight, at most 45% by weight, or at most 40% by weight, with % by weight based on the total weight of the inulin juice. In embodiments, the inulin juice may have a $\overline{Dp_n}$ between 5 and 7 and a solids content of at most 60% by weight, the inulin juice may have a $\overline{Dp_n}$ between 8 and 13 and a solids content of at most 50% by weight, or the inulin juice may have a $\overline{Dp_n}$ between 14 and 18 and a solids content of at most 40% by weight, with % by weight based on the total weight of the inulin juice. In embodiments, the inulin juice may have a $\overline{Dp_n}$ between 5 and 7 and a solids content of 20% by weight to 60% by weight, the inulin juice may have a $\overline{Dp_n}$ between 8 and 13 and a solids content of 20% by weight to 50% by weight, or the inulin juice may have a $\overline{Dp_n}$ between 14 and 18 and a solids content of 20% by weight to 40% by weight, with % by weight based on the total weight of the inulin juice. Such solids content advantageously allows efficient storage of inulin juice such as raw inulin juice in order to process it later.

The inulin juice provided in the methods as taught herein may have a solids content of 20% by weight to 60% by weight, with % by weight based on the total weight of the inulin juice. In embodiments, the inulin juice may have a solids content of 30% by weight to 50% by weight, with % by weight based on the total weight of the inulin juice; preferably wherein the inulin juice has a solids content of 30% by weight to 45% by weight, with % by weight based on the total weight of the inulin juice. Such solids content advantageously allows storing inulin juice such as raw inulin juice in an efficient and cost effective manner in order to refine and/or spray dry it later.

In embodiments, the inulin juice may have a solids content of at least 20% by weight, at least 21% by weight, at least 22% by weight, at least 23% by weight, at least 24% by weight, at least 25% by weight, at least 26% by weight, at least 27% by weight, at least 28% by weight, at least 29% by weight, at least 30% by weight, or at least 35% by weight, with % by weight based on the total weight of the inulin juice. In embodiments, the inulin juice may have a solids content of at most 60% by weight, at most 59% by weight, at most 58% by weight, at most 57% by weight, at most 56% by weight, at most 55% by weight, at most 54% by weight, at most 53% by weight, at most 52% by weight, at most 51% by weight, at most 50% by weight, at most 45% by weight, or at most 40% by weight, with % by weight based on the total weight of the inulin juice. In embodiments, the inulin juice may have a solids content of 25% by weight to 55% by weight, 30% by weight to 50% by weight, 30% by weight to 45% by weight, or 35% by weight to 40% by weight, with % by weight based on the total weight of the inulin juice. Preferably, the inulin juice has a solids content of about 40% by weight based on the total weight of the inulin juice. For instance, the inulin juice may comprise about 40 g of solids per 100 g of inulin juice. Such solids content advantageously allows storing inulin juice in an efficient manner for later refining and/or spray drying.

The terms "solids content" or "dry matter content" may be used interchangeably herein and refer to the ratio of the weight of solids in a composition to the total weight of the composition. The solids content may be expressed as a ratio of the weight of a sample after drying (in g) to the weight of a sample before drying (in g). For instance, the solids content may be expressed as a weight percentage (wt%) or g of dry matter per 100 g of sample. The solids content may be determined gravimetrically. Moisture may be evaporated from the sample by oven drying (e.g. for 24h at 103°C). The solids content may also be determined by Brix measurement, for example using a RFM 340 refractometer from Bellingham Stanley. A good approximation of dry matter may be achieved by a Brix measurement as long as one liquid phase is concerned (e.g. as for the inulin juice).

The terms "% by weight", "percentage by mass", "percentage by weight" or "wt%" may be used interchangeably herein and refer to the mass fraction $w_i$ times 100. The mass fraction $w_i$ is the ratio of the mass $m_i$ of one compound (or a defined group of compounds such as inulin and free sugars) to the mass $m_{tot}$ of the total mixture (e.g., the inulin juice as taught herein), as defined in (1):

$$w_i = \frac{m_i}{m_{tot}}$$

$$(1)$$

In embodiments, the inulin juice may comprise inulin, free sugars (e.g., glucose, fructose, sucrose), and impurities (e.g., salt, proteins). In embodiments, the inulin juice may comprise inulin and free sugars (e.g., glucose, fructose, sucrose). In embodiments, the inulin juice may comprise inulin.

In embodiments, the inulin juice, such as raw inulin juice, may comprise 60% to 99.5% by weight of inulin, 0% to 25% by weight of free sugars (e.g., glucose, fructose, sucrose), and 0% to 25% by weight of impurities (e.g., salt, proteins), with % by weight based on the dry weight of the inulin juice. Preferably, the inulin juice, such as raw inulin juice, comprises 70% to 88% by weight of inulin, 3% to 12% by weight of free sugars, and 0% to 17% by weight of impurities, with % by weight based on the dry weight of the inulin juice. The raw inulin juice may be obtained after extraction of chicory roots and filtration to remove the exhausted plant material.

In embodiments, the inulin juice may comprise native inulin. In embodiments, the inulin juice may be native inulin juice. The native inulin juice may be obtained after purification (refining) of the raw inulin juice.

In embodiments, the native inulin juice may comprise at least 88% by weight of inulin, at most 12% by weight of free sugars (e.g., glucose, fructose, sucrose), and less than 1.0% by weight of impurities (e.g., salt, proteins), such as less than 0.5% by weight of impurities, with % by weight based on the dry weight of the inulin juice. In embodiments, the native inulin juice may comprise at least 90% by weight of inulin, at most 10% by weight of free sugars (e.g., glucose, fructose, sucrose), and less than 1.0% by weight of impurities (e.g., salt, proteins), such as less than 0.5% by weight of impurities, with % by weight based on the dry weight of the inulin juice.

The inulin juice, such as inulin rich extract, can be obtained by hot water extraction of a plant material. The plant material for example chicory roots may be first harvested and then washed and, if necessary, sliced into cossettes (strips or slices) or shredded, milled, grinded, or cut. Hot water extraction can be performed by diffusion or counter current diffusion with hot water of the plant material, preferably of the comminuted (e.g., sliced, shredded, milled, grinded, or cut) plant material. Typical plant material (e.g., cossettes) to water ratio can be for example 1. Suitable temperature can be of at least 50°C, for example at least 60°C, for example at least 70°C. Typical extraction time may vary from 1 to 10 hours. The resulting juice containing inulin in solution may if needed be roughly filtered to remove exhausted plant material.

In embodiments, the inulin juice of step (a) may be obtained by a method comprising washing and optionally comminuting an inulin containing material such as chicory roots. In embodiments, the inulin juice of step (a) may be obtained by a method comprising or consisting of the steps of: hot water extraction of an inulin containing material such as chicory roots; preferably hot water counter-current diffusion extraction of an inulin containing material; and liquid/solid separation of the hot water extract, thereby obtaining an inulin juice, e.g., the liquid fraction of the liquid/solid separation. In embodiments, liquid/solid separation of the hot water extract results in a liquid fraction and a solid fraction. The liquid fraction can be considered as the inulin juice as taught herein.

In the extraction step such as the counter-current diffusion process, inulin may be diffused out of the cossettes, and the remaining pulp may be separated from the raw diffusion juice by means of a very coarse sieve (e.g., screen included in the diffusion device). The resulting filtrate still contains a lot of solids (small particles, colloids). Most of these solids may be eliminated by further fine filtration which is necessary for the further purification steps.

In embodiments, the liquid/solid separation of the inulin juice may be performed by filtration, centrifugation, or decantation; preferably the liquid/solid separation of the inulin juice is performed by filtration. In embodiments, the inulin juice of step (a) may be obtained using a method comprising the steps of (i) hot water extraction of a inulin containing material such as chicory roots; preferably hot water counter-current diffusion extraction of an inulin containing material, and (ii) filtration of the hot water extract, thereby obtaining an inulin juice, e.g., the filtrate of step (ii). The filtration step (ii) may comprise coarse filtration and fine filtration. In embodiments, filtration of the hot water extract results in a filtrate and a retentate. The filtrate can be considered as the inulin juice as taught herein. For instance, before step (a) as described herein, the inulin juice may be obtained by the steps (i)-(ii) to provide a filtrate comprising 60% to 99.5% by weight of inulin, 0% to 25% by weight of free sugars (e.g., glucose, fructose, sucrose), and 0% to 25% by weight of impurities (e.g., salt, proteins), with % by weight based on the dry weight of the inulin juice.

In embodiments, the methods as taught herein may further comprise a heat treatment of the inulin juice. In embodiments, the methods as taught herein may further comprise evaporation and/or concentration of the inulin juice.

In embodiments, the methods as taught herein may further comprise purification steps such as demineralization and optionally activated carbon filtration.

In embodiments, the inulin juice of step (a) may be obtained by a method comprising or consisting of the steps of: (i) hot water extraction of an inulin containing material such as chicory roots; preferably hot water counter-current diffusion extraction of an inulin containing material; (ii) liquid/solid separation of the hot water extract, thereby obtaining a liquid fraction and a solid fraction; and (iii) demineralization of the liquid fraction of step (ii), thereby recovering an inulin juice, e.g., the filtrate of step (iii). In embodiments, the liquid/solid separation of the inulin juice may be performed by filtration, centrifugation, or decantation; preferably the liquid/solid separation of the inulin juice is performed by filtration. Hence, in embodiments, the inulin juice of step (a) may be obtained using a method comprising or consisting of the steps of (i) hot water extraction of a inulin containing material such as chicory roots; preferably hot water counter-current diffusion extraction of an inulin containing material, (ii) filtration of the hot water extract; and (iii) demineralization of the filtrate of step (ii), thereby recovering an inulin juice, e.g., the filtrate of step (iii). In embodiments, demineralization may be performed by ion exchange chromatography.

In embodiments, the inulin juice of step (a) may be obtained by a method comprising or consisting of the steps of: (i) hot water extraction of an inulin containing material such as chicory roots; preferably hot water counter-current diffusion extraction of an inulin containing material; (ii) liquid/solid separation of the hot water extract, thereby obtaining a liquid fraction and a solid fraction; (iii) demineralization of the liquid fraction of step (ii); and (iv) activated carbon filtration of the filtrate of step (iii), thereby recovering an inulin juice, e.g., the filtrate of step (iv). In embodiments, the inulin juice of step (a) may be obtained by a method comprising or consisting of the steps of: (i) hot water extraction of an inulin containing material such as chicory roots; preferably hot water counter-current diffusion extraction of an inulin containing material; (ii) filtration of the hot water extract; (iii) demineralization of the filtrate of step (ii); and (iv) activated carbon filtration of the filtrate of step (iii), thereby recovering an inulin juice, e.g., the filtrate of step (iv).

In embodiments, the inulin juice of step (a) may be obtained by a method comprising a concentration step. The concentration step advantageously allows to obtain an inulin juice having a solids content of 20% by weight to 60% by weight, thereby allowing long time storage of the inulin juice in an efficient and cost effective manner. In embodiments, the inulin juice of step (a) may be obtained by a method comprising a concentration step of the liquid fraction of the liquid/solid separation of the hot water extract. The concentration step may be performed by evaporation.

In embodiments, the inulin juice of step (a) may be obtained by a method comprising a concentration step of the filtrate of step (ii) as taught herein. In embodiments, the inulin juice of step (a) may be obtained by a method comprising a concentration step of the filtrate of step (iii) as taught herein. In embodiments, the inulin juice of step (a) may be obtained by a method comprising a concentration step of the filtrate of step (iv) as taught herein.

In embodiments, the methods as taught herein may comprise providing an inulin juice in a crystallization tank.

In embodiments, the crystallization tank may be a vessel having a volume of about 5 m$^3$ to about 500 m$^3$, such as a volume of about 10 m$^3$ to about 400 m$^3$, about 20 m$^3$ to about 200 m$^3$, about 50 m$^3$ to about 100 m$^3$, or about 50 m$^3$ to about 55 m$^3$. Crystallisation under controlled conditions in relatively small quantities such as in a relatively small crystallisation tank (with relatively small compared to stored quantities) provides particle morphologies allowing storage and further processing of the inulin juice without pumping problems. In embodiments, the crystallization tank may be a cylindrical vessel. In embodiments, the crystallization tank may be a vessel made of inox. In embodiments, the crystallization tank may be a vessel comprising a stirrer. The stirrer may comprise one blade or at least two blades to agitate the inulin juice inside the tank.

In embodiments, the methods as taught herein may comprise providing an inulin juice at a temperature of 80°C to 100°C in a crystallization tank. In embodiments, prior to or during providing the inulin juice in the crystallisation tank, the methods as taught herein may comprise sterilization of the inulin juice. Sterilization may be performed by UHT treatment or in a heat exchanger.

In embodiments, the methods as taught herein may comprise the prior step of sterilization of the inulin juice. Prior to step (a), the inulin juice may be subjected to sterilisation to avoid microbial growth in the inulin juice when residing in the crystallization tank and storage tank. Sterilization or pasteurization may be performed by heating the inulin juice to a temperature of 121°C to 145°C. Sterilization may be followed by rapid cooling to a temperature of at most 100°C in order to avoid degradation of inulin.

The methods as taught herein comprise the step (b) of cooling the inulin juice in a crystallization tank to a temperature of at most about 40°C at an average cooling speed of from 0.4°C per hour to 20°C per hour, wherein the inulin juice is subjected to stirring during the cooling step.

In embodiments, the methods as taught herein may comprise cooling the inulin juice (in a crystallization tank) to a temperature of at most about 40°C, such as from about -6°C to about 40°C. In embodiments, the methods as taught herein may comprise cooling the inulin juice (in a crystallization tank) from a temperature of about 80°C to about 100°C to a temperature of at most about 40°C, such as from to a temperature of about -6°C to about 40°C.

In embodiments, the methods as taught herein may comprise cooling the inulin juice in a crystallization tank to a temperature of at most about 35°C, at most about 30°C, at most about 25°C, at most about 20°C, at most about 15°C, at most about 10°C, at most about 8°C, or at most about 5°C. Such temperatures advantageously allow for controlled crystallization of the inulin juice thereby forming a suspension which allows storage and good processability after storage.

The term "cooling a composition" as used herein refers to the action or process of making the composition (e.g., the inulin juice) colder (i.e., less warm), i.e. decreasing the temperature of the composition (e.g., the inulin juice) from a higher temperature (e.g., between about 80°C and about 100°C) to a lower temperature (e.g. between about -6°C and about 40°C).

To cool a composition, the composition may be conveniently exposed to an environment having the desired temperature, e.g., a temperature between 0.5°C above the inulin juice's freezing point (e.g., about -6°C, e.g., about -4°C, about 0°C, about 0.1°C, or about 1°C) and about 40°C or a temperature between about 0°C (e.g., about 0.1°C, e.g., about 0.10°C) and about 25°C, until the desired temperature is reached, or the composition may be conveniently exposed to an environment having a temperature which is decreasing gradually or stepwise until the desired temperature is reached.

The recitation "cooling a composition to a given temperature (such as about 0°C)" as used herein refers to decreasing (i.e., lowering) the temperature of the composition (from a higher temperature) to said given temperature.

In embodiments, the methods as taught herein may comprise cooling the inulin juice in a crystallization tank to a temperature between 0.5°C above the inulin juice's freezing point and about 40°C or to a temperature between 0.5°C above the inulin juice's freezing point and about 35°C. In embodiments, the methods as taught herein may comprise cooling the inulin juice in a crystallization tank to a temperature between 0.5°C above the inulin juice's freezing point and about 30°C, about 25°C, about 20°C, about 15°C, about 10°C, about 8°C, or about 5°C.

In embodiments, the method may comprise cooling the inulin juice in a crystallization tank to a temperature of from about -6°C to about 40°C (i.e., between about -6°C and about 40°C), such as a temperature of from about -4°C to about 25°C, a temperature of from about 0°C to about 10°C, a temperature of from about 2°C to about 8°C, or a temperature of from about 0.1°C to about 5°C. Such temperatures advantageously allow for controlled crystallization of the inulin juice thereby forming a suspension which allows storage and good processability after storage.

In embodiments, the methods as taught herein may comprise cooling the inulin juice in a crystallization tank to a temperature of from about -6°C to about 40°C. In embodiments, the methods as taught herein may comprise cooling the inulin juice in a crystallization tank to a temperature of from about -5°C to about 40°C. In embodiments, the methods as taught herein may comprise cooling the inulin juice in a crystallization tank to a temperature of from about -4°C to about 40°C, from about-3°C to about 40°C, from about-2°C to about 40°C, from about-1°C to about 40°C, from about 0°C to about 40°C, from about 0.1°C (e.g., 0.10°C) to about 40°C, from about 1°C to about 40°C, or from about 2°C to about 40°C.

In embodiments, the methods as taught herein may comprise cooling the inulin juice in a crystallization tank to a temperature of from about -6°C to about 35°C. In embodiments, the methods as taught herein may comprise cooling the inulin juice in a crystallization tank to a temperature of from about -6°C to about 30°C, such as a temperature of from about -6°C to about 25°C, a temperature of from about -6°C to about 20°C, a temperature of from about -6°C to about 15°C, a temperature of from about -6°C to about 10°C, a temperature of from about -6°C to about 8°C, or a temperature of from about -6°C to about 5°C.

In embodiments, the methods as taught herein may comprise cooling the inulin juice in a crystallization tank to a temperature of from about -4°C to about 35°C. In embodiments, the methods as taught herein may comprise cooling the inulin juice in a crystallization tank to a temperature of from about -4°C to about 30°C, such as a temperature of from about -4°C to about 25°C, a temperature of from about -4°C to about 20°C, a temperature of from about -4°C to about 15°C, a temperature of from about -4°C to about 10°C, a temperature of from about -4°C to about 8°C, or a temperature of from about -4°C to about 5°C.

In embodiments, the methods as taught herein may comprise cooling the inulin juice in a crystallization tank to a temperature of from about 0°C to about 40°C. In embodiments, the methods as taught herein may comprise cooling the inulin juice in a crystallization tank to a temperature of from about 0°C to about 35°C, such as from about 0°C to about 30°C, from about 0°C to about 25°C, from about 0°C to about 20°C, from about 0°C to about 15°C, from about 0°C to about 10°C, from about 0°C to about 8°C, or from about 0°C to about 5°C.

In embodiments, the methods as taught herein may comprise cooling the inulin juice in a crystallization tank to a temperature of from about 0.1°C to about 10°C, from about 1°C to about 10°C, or from about 2°C to about 10°C. In embodiments, the methods as taught herein may comprise cooling the inulin juice in a crystallization tank to a temperature of from about 0.1°C to about 8°C, from about 1°C to about 8°C, or from about 2°C to about 8°C. In embodiments, the methods as taught herein may comprise cooling the inulin juice in a crystallization tank to a temperature of from about 0.1°C to about 5°C, from about 1°C to about 5°C, or from about 2°C to about 5°C.

In embodiments, the method may comprise cooling the inulin juice in a crystallization tank to a temperature of from about 15°C to about 25°C (i.e., room temperature), such as a temperature of from about 18°C to about 22°C.

In embodiments, the methods as taught herein may comprise cooling the inulin juice in a crystallization tank to a temperature below 15°C, such a temperature below 14°C, below 13°C, below 12°C, below 11°C, below 10°C, below 8°C, or a temperature below 5°C. Such temperatures advantageously allow for controlled crystallization of the inulin juice thereby forming a suspension which allows storage and good processability after storage.

In embodiments, the methods as taught herein may comprise cooling the inulin juice in a crystallization tank at an average cooling speed (i.e., cooling rate) of from 0.4°C per hour to 20°C per hour. In embodiments, the methods as taught herein may comprise cooling the inulin juice in a crystallization tank at an average cooling speed of from 0.5°C per hour to 15°C per hour, for example from 0.5°C per hour to 15°C per hour, from 1°C per hour to 15°C per hour, from 1.5°C per hour to 10°C per hour, from 2°C per hour to 5°C per hour, or from 2.5°C per hour to 10°C per hour. Such cooling speeds advantageously allows for controlled crystallization of the inulin juice thereby forming a suspension which allows storage and good processability after storage.

In embodiments, the methods as taught herein may comprise cooling the inulin juice in a crystallization tank for (a time of) at least 3 hours. For instance, cooling an inulin juice from 100°C to 40°C at a cooling speed of 20°C per hour may theoretically take about 3 hours. However, without being bound to theory, the cooling speed may be not linear during the whole cooling step. In embodiments, the methods as taught herein may comprise cooling the inulin juice in a crystallization tank for (a time of) at least 4 hours, at least 5 hours, at least 6 hours, at least 7 hours, at least 8 hours, at least 9 hours, at least 10 hours, at least 11 hours, at least 12 hours, at least 18 hours, at least 24 hours, at least 48 hours, at least 72 hours, or at least 96 hours. Preferably, the methods as taught herein may comprise cooling the inulin juice in a crystallization tank for (a time of) from 12 hours to 144 hours, such as from 18 hours to 120 hours, from 24 hours to 96 hours, from 24 hours to 72 hours, or from 24 hours to 48 hours.

In embodiments, the cooling speed may be linear during the whole cooling step or during at least part of the cooling step. In embodiments, the cooling speed may be not linear. In embodiments, the cooling speed may vary during the whole cooling step or during at least part of the cooling step. Temperature, as used in the context of the present invention, is expressed in degrees Celsius (°C). It is to be noted however that temperature may also be expressed in any other suitable unit such as Kelvin (K).

It is noted that temperature is rounded to the nearest one. For example, 8.1°C, 8.2°C, 8.3°C, and 8.4°C is rounded down to 8°C, while 8.5°C, 8.6°C, 8.7°C, 8.8°C, and 8.9°C is rounded up to 9 °C. Reference to a temperature value not followed by any decimal place also particularly comprises that same value followed by 0 at the first decimal place, e.g., reference to 8°C particularly encompasses 8.0°C.

Time, as used in the context of the present invention, is expressed in hours or days. It is to be noted however that time may also be expressed in other units such as seconds or minutes.

It is noted that time in hours is rounded to the nearest one. For example, 24.1 hours (24 hours 6 minutes), 24.2 hours (24 hours 12 minutes), 24.3 hours (24 hours 18 minutes), 24.4 hours (24 hours 24 minutes) is rounded down to 24 hours, while 24.5 hours (24 hours 30 minutes), 24.6 hours (24 hours 36 minutes), 24.7 hours (24 hours 42 minutes), 24.8 hours (24 hours 48 minutes), and 24.9 hours (24 hours 54 minutes) is rounded up to 25 hours. Reference to a time period not followed by any decimal place also particularly comprises that same value followed by 0 at the first decimal place, e.g., reference to 24 hours particularly encompasses 24.0 hours.

The terms "time", "time period", and "time duration" may be used interchangeably.

The terms "24 hours" and "1 day" may be used interchangeably. The terms "48 hours" and "2 days" may be used interchangeably. The terms "72 hours" and "3 days" may be used interchangeably. The terms "96 hours" and "4 days" may be used interchangeably. The terms "120 hours" and "5 days" may be used interchangeably. The terms "144 hours" and "6 days" may be used interchangeably. The terms "168 hours" and "7 days" may be used interchangeably. The terms "192 hours" and "8 days" may be used interchangeably.

In embodiments, the methods as taught herein comprise subjecting the inulin juice to stirring during the cooling step. Such stirring advantageously allows for thermal exchange with the tank walls and controlled crystallization of the inulin juice, thereby providing controlled particle morphology.

In embodiments, the stirring energy is about 0.005 kW/m$^3$ to about 0.5 kW/m$^3$, such as about 0.03 kW/m$^3$. In embodiments, the stirring speed may be 4 rpm to 50 rpm, such as 4 rpm to 40 rpm. In embodiments, the stirring energy may be about 0.005 kW/m$^3$ to about 0.5 kW/m$^3$, such as about 0.03 kW/m$^3$, and the stirring speed may be 4 rpm to 50 rpm, such as 4 rpm to 40 rpm.

Method step (b) may advantageously allow crystallisation of the inulin juice to obtain an inulin juice (i.e., a suspension) in which at least 50% of the crystallisable carbohydrates is crystallized. In an embodiment, in step (b) an inulin juice is obtained in which at least 50% of the crystallizable carbohydrates is crystallized. For instance, at least 60%, of the crystallisable carbohydrates may be crystallized, such as at least 65%, at least 70%, at least 80%, at least 85%, at least 90%, or at least 95%, such as 100%, of the crystallisable carbohydrates may be crystallized. For example, in 100 g of total carbohydrate a fraction of 50 g of carbohydrate may crystallize, and if at least 30 g of the total carbohydrates are crystallized, then 60% of the crystallizable carbohydrates is crystallized.

In embodiments, the degree of crystallisation (DC) of the inulin juice cooled to at a temperature of at most 40°C in step (b) may be at least 50%, such as at least 60%, at least 65%, at least 70%, at least 80%, at least 85%, at least 90%, or at least 95%, such as 100%. In embodiments, in step (b) an inulin juice is obtained having a degree of crystallisation of at least 50%, such as at least 60%, at least 65%, at least 70%, at least 80%, at least 85%, at least 90%, or at least 95%, such as 100%.

The degree of crystallization (DC) of an inulin juice refers to the ratio (expressed in %) between the crystallization percentage of an inulin juice after a crystallization time $t$ (IC$^t$) to the maximum crystallization percentage of the same inulin juice after a total crystallization time of 4 weeks at a temperature of 4°C (IC$^e$).

The degree of crystallization (expressed in %) of an inulin juice as taught herein may be calculated by equation (2):

$$DC = 100\,\frac{IC^t}{IC^e} \qquad (2)$$

wherein $DC$ is the degree of crystallisation, $IC^t$ is the crystallization percentage of an inulin juice after a crystallization time $t$, and $IC^e$ is the maximum crystallization percentage of the same inulin juice after a crystallization time of 4 weeks at a temperature of 4°C.

For example, if the crystallization percentage of an inulin juice after a crystallization time $t$ (IC$^t$) is 40% and the maximum crystallization percentage of the same inulin juice after a crystallization time of 4 weeks at 4°C (IC$^e$) is 80%, then the degree of crystallization may be calculated as: DC (%) = 100 × (40%/80%) = 50%

The crystallization percentage of an inulin juice after a crystallization time $t$ ($IC^t$) or the percentage of crystallized inulin (IC) refers to the ratio (expressed in weight percentage) of the amount of inulin that is crystallized after a crystallization time $t$ to the total amount of inulin (including small sugars). Prior to any crystallization, a sample of the inulin juice containing only soluble material is first analyzed for its dry matter content (B°) by usual Brix measurement (using a RFM 340 refractometer from Bellingham Stanley for example).

During crystallization, e.g. after a crystallization time $t$, a sample of the inulin juice is centrifugated (e.g., 3000G for 15 minutes) to obtain a clear supernatant. The dry matter content of the supernatant (B) is then measured using the same equipment.

The amount of crystallized inulin (expressed in %) of an inulin juice as taught herein may be calculated by equation (3):

$$IC(\%) = 100 \left( 1 - \frac{\frac{B}{B°} + \frac{B}{B°}(\frac{100-P}{P}) - B/100 - B\alpha/10000 - (\frac{100-P}{P})}{(1 - B\alpha/10000 - B/100)} \right)$$

$$(3)$$

wherein:

> $IC$ is the crystallized inulin (in percentage);
> $B$ is the dry matter (sugar) content of the supernatant as determined by Brix measurement (in degrees Brix or percentage by mass);
> $B°$ is the dry matter (sugar) content of the inulin juice before crystallization as determined by Brix measurement (in degrees Brix or percentage by mass);
> $P$ is the degree of purity of the inulin juice before crystallization, i.e. the amount of inulin (including small sugars) expressed in % of the dry matter. The AOAC997.08 method may be used for determination of $P$; and
> $\alpha$ is the amount of inulin crystallization water (in mass percentage) equal to 10 (André et al., 1996, Macromolecules, 29, 4626-4635). The paper by André et al. provides in the abstract that *"In the monohydrate form obtained when inulin crystals were kept in a moist environment, there is one molecule of water per fructosyl residue."* For the calculation: molecular weight of 1 fructosyl residue = 162; molecular weight of 1 water molecule = 18, so (18/162+18) = 10%.

In embodiments, the inulin juice may comprise 10% to 75% by weight of crystallizable carbohydrates (depending on the chain lengths and/or dry matter of the juice). In embodiments, the inulin juice may comprise 20% to 70% by weight, or 30% to 60% by weight of crystallizable carbohydrates.

The term "crystallization" as used herein refers to the formation of particles, for example having a size of 1 $\mu$m to 40 $\mu$m. For instance, the particles may have a size of 2 $\mu$m to 30 $\mu$m. The particles may have variable shape. An inulin juice in which at least some degree of crystallisation has occurred may also be referred to herein as an inulin suspension.

In embodiments, the methods as taught herein may comprise prior to transport a step, i.e., step (b'), of maintaining the inulin juice in the crystallization tank at a temperature of at most about 40°C, such from about -6°C to about 40°C, for 1 hour to 96 hours. Such maintaining step advantageously allows to grow existing particles (instead of creating new ones).

The recitation "maintaining a composition at a given temperature (such as about 0°C) for a given time period (such as for 24 hours)" as used herein refers to ensuring that the temperature of the composition remains (i.e., is maintained, kept, or controlled) at said temperature for the recited time period.

To control the temperature of the composition, the composition may be conveniently exposed to an environment having the desired temperature, e.g., a temperature between 0.5 above the inulin juice's freezing point (e.g., about -6°C, e.g., about -4°C) and about 40°C or a temperature between about 0°C (e.g., about 0.1°C, e.g., about 0.10°C) and about 25°C, for a desired time period.

In embodiments, the step (b') comprises maintaining the inulin juice with stirring of the inulin juice. Stirring may be performed as described herein.

In embodiments, the step (b') may comprise maintaining the inulin juice at a temperature of at most about 40°C for 1 hour to 96 hours, such as for 2 hours to 84 hours, for 3 hours to 72 hours, for 4 hours to 60 hours, for 5 hours to 48, for 6 hours to 24 hours, or for 12 hours to 18 hours.

In embodiments, the step (b') may comprise maintaining the inulin juice at a temperature which is the same temperature as the temperature of the inulin juice after the cooling step (b). Typically, no additional cooling is performed during the step (b'). When reference is made to step (b'), the phrase "maintaining the inulin juice at a given temperature" is meant to refer to maintaining the inulin juice in the crystallization tank at said given temperature for 1 hour to 96 hours, such as for 2 hours to 84 hours, for 3 hours to 72 hours, for 4 hours to 60 hours, for 5 hours to 48, for 6 hours to 24 hours, or for 12 hours to 18 hours.

Accordingly, in an aspect, the invention provides a method for storing an inulin juice, the method comprising the steps of:

(a) providing an inulin juice at a temperature of about 80°C to about 100°C in a crystallization tank, wherein the inulin juice has a solids content of 20% by weight to 60% by weight, with % by weight based on the total weight of the inulin juice;

(b) cooling the inulin juice in the crystallization tank to a temperature of at most about 40°C at an average cooling speed of from 0.4°C per hour to 20°C per hour, wherein the inulin juice is subjected to stirring during the cooling step;

(b') maintaining the inulin juice in the crystallization tank at a temperature of at most about 40°C, such from about -6°C to about 40°C, for 1 hour to 96 hours, wherein the inulin juice is subjected to stirring during the maintaining step;

(c) transporting the inulin juice from the crystallization tank to a storage tank; and

(d) maintaining the inulin juice in the storage tank at a temperature of at most about 40°C, such as from about -6°C to about 40°C.

The methods as taught herein comprise the step (c) of transporting the inulin juice from the crystallization tank to a storage tank.

The terms "transporting" or "moving" a composition as used herein refers to bringing a composition from a first location in an industrial plant to a second location in an industrial plant.

In embodiments, the transporting step may be performed by gravity and/or by pumping the inulin juice through a piping system.

In embodiments, the storage tank may be a vessel having a volume of about 50 m$^3$ to about 25000 m$^3$, such as a volume of about 100 m$^3$ to about 10000 m$^3$, or about 500 m$^3$ to about 5000 m$^3$. In embodiments, the storage tank may be a cylindrical vessel. In embodiments, the storage tank may be a vessel made of inox.

In embodiments, the methods as taught herein may comprise during transport a step, i.e., a step (c'), of cooling the inulin juice to a temperature which is lower than the temperature of the inulin juice after the cooling step (b). Such cooling step during transport may be performed by exposing a composition such as the inulin juice to a heat exchanger.

In embodiments, the methods as taught herein may comprise during transport a step of further cooling the inulin juice to a temperature of at most about 35°C. In embodiments, the methods as taught herein may comprise during transport a step of cooling the inulin juice to a temperature of at most about 30°C, such as a temperature of at most about 25°C, a temperature of at most about 20°C, a temperature of at most about 15°C, a temperature of at most about 10°C, a temperature of at most about 8°C, or a temperature of at most about 5°C.

In embodiments, the methods as taught herein may comprise during transport a step, i.e., a step (c'), of further cooling the inulin juice to a temperature of at most about 10°C, such as to a temperature of from about -6°C to about 10°C, e.g. via a heat exchanger. Such further cooling during transport may allow further cooling of the inulin juice such as to a temperature below 10°C, thereby resulting in crystallization percentages which allow storage and further processing of the inulin juice.

Accordingly, in an aspect, the invention provides a method for storing an inulin juice, the method comprising the steps of:

(a) providing an inulin juice at a temperature of about 80°C to about 100°C in a crystallization tank, wherein the inulin juice has a solids content of 20% by weight to 60% by weight, with % by weight based on the total weight of the inulin juice;

(b) cooling the inulin juice in the crystallization tank to a temperature of at most about 40°C at an average cooling speed of from 0.4°C per hour to 20°C per hour, wherein the inulin juice is subjected to stirring during the cooling step;

(b') optionally maintaining the inulin juice in the crystallization tank at a temperature of at most about 40°C, such from about -6°C to about 40°C, for 1 hour to 96 hours, wherein the inulin juice is subjected to stirring during the maintaining step;

(c) transporting the inulin juice from the crystallization tank to a storage tank, wherein during transport the inulin juice is further cooled to a temperature of at most about 10°C, such as a temperature of from about -6°C to about 10°C; and

(d) maintaining the inulin juice in the storage tank at a temperature of at most about 10°C, such as a temperature of from about -6°C to about 10°C.

In embodiments, the methods as taught herein may comprise during transport a step of cooling the inulin juice to a temperature of from about -6°C to about 10°C, such as a temperature of from about -4°C to about 10°C, a temperature of from about -2°C to about 10°C, a temperature of from about 0°C to about 10°C, a temperature of from about 0.1°C to about 10°C, a temperature of from about 2°C to about 8°C, or a temperature of from about 0.1°C to about 5°C.

The methods as taught herein comprise the step (d) of maintaining the inulin juice in the storage tank at a temperature of at most about 40°C, such as from about -6°C to about 40°C.

In embodiments, the methods as taught herein may comprise maintaining the inulin juice in the storage tank at a temperature which is the same temperature as the temperature of the inulin juice after the cooling step (b) or which is the same temperature as the temperature of the inulin juice after the optional cooling step (c').

In embodiments, the methods as taught herein may comprise maintaining the inulin juice in the storage tank at a temperature of a temperature of at most about 35°C, at most about 30°C, at most about 25°C, at most about 20°C, at most about 15°C, at most about 10°C, at most about 8°C, or at most about 5°C. Such temperatures advantageously allow long time storage of the inulin juice.

In embodiments, the methods as taught herein may comprise maintaining the inulin juice in the storage tank at a temperature between 0.5°C above the inulin juice's freezing point and about 40°C or at a temperature between 0.5°C above the inulin juice's freezing point and about 35°C. In embodiments, the methods as taught herein may comprise maintaining the inulin juice in the storage tank at a temperature between 0.5°C above the inulin juice's freezing point and about 30°C, about 25°C, about 20°C, about 15°C, about 10°C, about 8°C, or about 5°C.

In embodiments, the methods as taught herein may comprise maintaining the inulin juice in the storage tank at a temperature of from about -6°C to about 40°C (i.e., between about -6°C and about 40°C), such as a temperature of from about -4°C to about 25°C, a temperature of from about 0°C to about 10°C, a temperature of from about 2°C to about 8°C, or a temperature of from about 0.1°C to about 5°C. Such temperatures advantageously allow long time storage of the inulin juice.

In embodiments, the methods as taught herein may comprise maintaining the inulin juice in the storage tank at a temperature of from about -6°C to about 40°C. In embodiments, the methods as taught herein may comprise maintaining the inulin juice in the storage tank at a temperature of from about -5°C to about 40°C. In embodiments, the methods as taught herein may comprise maintaining the inulin juice in the storage tank at a temperature of from about -4°C to about 40°C, from about -3°C to about 40°C, from about -2°C to about 40°C, from about -1°C to about 40°C, from about 0°C to about 40°C, from about 0.1°C (e.g., 0.10°C) to about 40°C, from about 1°C to about 40°C, or from about 2°C to about 40°C.

In embodiments, the methods as taught herein may comprise maintaining the inulin juice in the storage tank at a temperature of from about -6°C to about 35°C. In embodiments, the methods as taught herein may comprise maintaining the inulin juice in the storage tank at a temperature of from about -6°C to about 30°C, such as a temperature of from about -6°C to about 25°C, a temperature of from about -6°C to about 20°C, a temperature of from about -6°C to about 15°C, a temperature of from about -6°C to about 10°C, a temperature of from about -6°C to about 8°C, or a temperature of from about -6°C to about 5°C.

In embodiments, the methods as taught herein may comprise maintaining the inulin juice in the storage tank at a temperature of from about -4°C to about 35°C. In embodiments, the methods as taught herein may comprise maintaining the inulin juice in the storage tank at a temperature of from about -4°C to about 30°C, such as a temperature of from about -4°C to about 25°C, a temperature of from about -4°C to about 20°C, a temperature of from about -4°C to about 15°C, a temperature of from about -4°C to about 10°C, a temperature of from about -4°C to about 8°C, or a temperature of from about -4°C to about 5°C.

In embodiments, the methods as taught herein may comprise maintaining the inulin juice in the storage tank at a temperature of from about 0°C to about 40°C. In embodiments, the methods as taught herein may comprise maintaining the inulin juice in the storage tank at a temperature of from about 0°C to about 35°C, such as from about 0°C to about 30°C, from about 0°C to about 25°C, from about 0°C to about 20°C, from about 0°C to about 15°C, from about 0°C to about 10°C, from about 0°C to about 8°C, or from about 0°C to about 5°C.

In embodiments, the methods as taught herein may comprise maintaining the inulin juice in the storage tank at a temperature of from about 0.1°C to about 10°C, from about 1°C to about 10°C, or from about 2°C to about 10°C. In embodiments, the methods as taught herein may comprise maintaining the inulin juice in the storage tank at a temperature of from about 0.1°C to about 8°C, from about 1°C to about 8°C, or from about 2°C to about 8°C. In embodiments, the step (b') may comprise maintaining the inulin juice at a temperature of from about 0.1°C to about 5°C, from about 1°C to about 5°C, or from about 2°C to about 5°C.

In embodiments, the methods as taught herein may comprise maintaining the inulin juice in the storage tank at a temperature of from about 15°C to about 25°C (i.e., room temperature), such as a temperature of from about 18°C to about 22°C. In embodiments the methods as taught herein may comprise maintaining the inulin juice in the storage tank at a temperature below 15°C, such a temperature below 14°C, below 13°C, below 12°C, below 11°C, below 10°C, below 8°C, or a temperature below 5°C. Such temperatures advantageously allow long time storage of the inulin juice.

In embodiments, the inulin juice may be maintained in the storage tank for at least one week, such as for at least two weeks, at least three weeks, or more such as at least one month, at least two months, at least three months, at least four months, at least five months, or for at least six months. For instance, the inulin juice may be maintained in the storage tank for at least seven months, at least eight months, at least nine months, at least ten months, at least eleven months, or at least one year. Such storage periods allow to process inulin juice all year round. In embodiments, the inulin juice may be maintained in the storage tank for at most one year.

In embodiments, when not 100% of the crystallizable carbohydrates are crystallized in step (b), and optionally step (c'), the method step (d) may advantageously result in further crystallization of at least 0.1% of the crystallizable carbohydrates. For instance, step (d) may result in further crystallisation of at least 0.1%, at least 0.2%, at least 0.3%, at least 0.4%, at least 0.5%, at least 1%, at least 2%, at least 3%, at least 4%, or at least 5%, such as at least 10%, or at least 15%, of the crystallizable carbohydrates. For example, in 100 g of total carbohydrate a fraction of 50 g of carbohydrate may crystallize, and if at least 0.05 g (at least 50 mg) of the total carbohydrates are crystallized, then at least 0.1% of the crystallizable carbohydrates is further crystallized.

In embodiments, step (d) may result in further crystallisation of 0.1% to 50% of the crystallizable carbohydrates. For instance, the step (d) may result in further crystallisation of 0.5% to 20%, 1.0% to 10%, or 2% to 5% of the crystallizable carbohydrates.

In embodiments, the inulin juice in the storage tank may have a solids content of 20 % by weight to 60% by weight, with % by weight based on the total weight of the inulin juice; preferably wherein the inulin juice in the storage tank has a solids content of 30% by weight to 45% by weight, with % by weight based on the total weight of the inulin juice.

In embodiments, after storage in the storage tank the inulin juice may be used for the preparation of one or more of a native inulin product, a long chain inulin product, or a short chain inulin product. Hence, in embodiments, the methods as taught herein may comprise further processing the stored inulin juice. In embodiments, the methods as taught herein may comprise transporting the stored inulin juice, e.g. from the storage tank to a downstream part of the processing plant such as to a purification unit, a refining unit, or a spray dry tower.

In embodiments, after storage in the storage tank the inulin juice may be heated prior to any further processing or refining step. In embodiments, after storage in the storage tank the inulin juice may be heated and subjected to any further processing or refining step. In embodiments, after storage in the storage tank the inulin juice may be subjected to any further processing or refining step. Further processing steps of the inulin juice are known in the art and include chromatography for small sugar reduction, purification such as by ion exchange chromatography and optionally activated carbon filtration (i.e., carbon filtering), concentration, evaporation, and spray drying.

In embodiments, the methods as taught herein may comprise mixing stored inulin juice from the beginning of the harvesting season (September to November) with inulin juice from the end of the harvesting season (December to February). In embodiments, the methods as taught herein may comprise mixing inulin juices produced and stored at different harvesting dates. Thereby, the present method advantageously allows to obtain an inulin product complying with predetermined specifications such as average degree of polymerisation of the inulin or free sugar (i.e., glucose, fructose, sucrose) content. Furthermore, such mixing allows to increase the solids content of the inulin juice for spray drying, thereby allowing to dry the inulin juice more cost efficient.

The present application also provides aspects and embodiments as set forth in the following Statements:

Statement 1. A method for storing an inulin juice, the method comprising the steps of:

(a) providing an inulin juice at a temperature of about 80°C to about 100°C in a crystallization tank, wherein the inulin juice has a solids content of 20% by weight to 60% by weight, with % by weight based on the total weight of the inulin juice;

(b) cooling the inulin juice in the crystallization tank to a temperature of at most about 40°C at an average cooling speed of from 0.4°C per hour to 20°C per hour, wherein the inulin juice is subjected to stirring during the cooling step;

(c) transporting the inulin juice from the crystallization tank to a storage tank; and

(d) maintaining the inulin juice in the storage tank at a temperature of at most about 40°C.

Statement 2. The method according to statement 1, wherein the inulin juice has a $\overline{Dp_n}$ between 5 and 7 and a solids content of 20% by weight to 60% by weight, the inulin juice has a $\overline{Dp_n}$ between 8 and 13 and a solids content of 20% by weight to 50% by weight, or the inulin juice has a $\overline{Dp_n}$ between 14 and 18 and a solids content of 20% by weight to 40% by weight, with % by weight based on the total weight of the inulin juice; and/or wherein the inulin juice has a solids content of 30% by weight to 50% by weight, with % by weight based on the total weight of the inulin juice; preferably wherein the inulin juice has a solids content of 30% by weight to 45% by weight, with % by weight based on the total weight of the inulin juice.

Statement 3. The method according to statement 1 or 2, wherein in step (b) an inulin juice is obtained in which at least 50% of the crystallizable carbohydrates is crystallized.

Statement 4. The method according to any one of statements 1 to 3, wherein the inulin juice comprises 60% by weight to 99.5% by weight of inulin, 0% by weight to 25% by weight of free sugars, and 0% by weight to 25% by weight of impurities, with % by weight based on the dry weight of the inulin juice; preferably wherein the inulin juice comprises 70% by weight to 88% by weight of inulin, 3% by weight to 12% by weight of free sugars, and 0% by weight to 17% by weight of impurities, with % by weight based on the dry weight of the inulin juice.

Statement 5. The method according to any one of statements 1 to 4, wherein the inulin juice comprises inulin having an average degree of polymerization between 5 and 18.

Statement 6. The method according to any one of statements 1 to 5, wherein the inulin juice comprises native inulin.

Statement 7. The method according to any one of statements 1 to 6, wherein the inulin juice of step (a) is obtained by a method comprising the steps of:

- hot water extraction of an inulin containing material such as chicory roots; preferably hot water counter-current diffusion extraction of an inulin containing material; and

- liquid/solid separation of the hot water extract, thereby obtaining an inulin juice; or

wherein the inulin juice of step (a) is obtained by a method comprising the steps of:

(i) hot water extraction of an inulin containing material such as chicory roots; preferably hot water counter-current diffusion extraction of an inulin containing material;

(ii) liquid/solid separation of the hot water extract, thereby obtaining a liquid fraction and a solid fraction;

(iii) demineralization of the liquid fraction of step (ii); and

(iv) activated carbon filtration of the filtrate of step (iii), thereby recovering an inulin juice.

Statement 8. The method according to any one of statements 1 to 7, wherein the method comprises the prior step of sterilization of the inulin juice.

Statement 9. The method according to any one of statements 1 to 8, wherein the method comprises cooling the inulin juice in a crystallization tank to a temperature of at most about 25°C, at most about 10°C, at most about 8°C, or at most about 5°C; and/or wherein the method comprises cooling the inulin juice in a crystallization tank to a temperature of from about -6°C to about 40°C, such as a temperature of from about -4°C to about 25°C, a temperature of from about 0°C to about 10°C, a temperature of from about 2°C to about 8°C, or a temperature of from about 0.1°C to about 5°C.

Statement 10. The method according to any one of statements 1 to 9, wherein the stirring energy is about 0.005 kW/m$^3$ to about 0.5 kW/m$^3$ and/or wherein the stirring speed is 4 rpm to 50 rpm. Statement 11. The method according to any one of statements 1 to 10, wherein the method comprises prior to transport a step of maintaining the inulin juice in the crystallization tank at a temperature of at most about 40°C for 1 hour to 96 hours, such as wherein the method comprises prior to transport a step of maintaining the inulin juice in the crystallization tank at a temperature of from about -6°C to about 40°C for 1 hour to 96 hours.

Statement 12. The method according to any one of statements 1 to 11, wherein the method comprises during transport a step of further cooling the inulin juice to a temperature of at most about 10°C, such as wherein the method comprises during transport a step of further cooling the inulin juice to a temperature of from about -6°C to about 10°C, preferably via a heat exchanger. Statement 13. The method according to any one of statements 1 to 12, wherein the inulin juice is maintained in the storage tank for at least one week, such as wherein the inulin juice is maintained in the storage tank for at least one month or for at least six months.

Statement 14. The method according to any one of statements 1 to 13, wherein after storage in the storage tank the inulin juice is used for the preparation of one or more of a native inulin product, a long chain inulin product, or a short chain inulin product.

Statement 15. The method according to any one of statements 1 to 14, wherein after storage in the storage tank the inulin juice is heated prior to any further processing step.

The above aspects and embodiments are further supported by the following non-limiting examples.

## EXAMPLES

### Method 1: Determination of the percentage of crystallized inulin (IC)

The percentage of crystallized inulin (IC) is defined as the ratio (expressed in weight percentage) of the amount of inulin that is crystallized and the total amount of inulin (including small sugars). Prior to any crystallization, a sample of the juice containing only soluble material is analyzed for its dry matter (sugar) content (B°) by usual Brix measurement, for example using a RFM 340 refractometer from Bellingham Stanley.

During crystallization, a sample of the inulin suspension is centrifugated (3000G for 15 minutes) to obtain a clear supernatant. The dry matter (sugar) content of the supernatant (B) is then measured by Brix measurement using the same equipment.

The amount of crystallized inulin (expressed in %) is defined as the amount of inulin being crystallized with respect to the total amount of inulin.

The amount of crystallized inulin (expressed in %) of an inulin juice as taught herein may be calculated by the following equation:

$$IC(\%) = 100\left(1 - \frac{\frac{B}{B°} + \frac{B}{B°}(\frac{100-P}{P}) - B/100 - B\alpha/10000 - (\frac{100-P}{P})}{(1 - B\alpha/10000 - B/100)}\right)$$

wherein:

$IC$ is the crystallized inulin (in percentage);
$B$ is the dry matter (sugar) content of the supernatant as determined by Brix measurement (in degrees Brix or percentage by mass);
$B°$ is the dry matter (sugar) content of the inulin juice before crystallization as determined by Brix measurement (in degrees Brix or percentage by mass);
$P$ is the degree of purity of the inulin juice before crystallization, i.e. the amount of inulin (including small sugars) expressed in % of the dry matter. The AOAC997.08 method may be used for determination of $P$; and
$\alpha$ is the amount of inulin crystallization water (in mass percentage), equal to 10 (André et al., 1996, Macromolecules, 29, 4626-4635). See abstract of André et al.: *"In the monohydrate form obtained when inulin crystals were kept in a moist environment, there is one molecule of water per fructosyl residue."* For the calculation: molecular weight of 1 fructosyl residue = 162; molecular weight of 1 water molecule = 18, so (18/162+18) = 10%.

### Method 2: Determination of the degree of crystallization (DC)

The degree of crystallization (DC) (expressed in %) of a (partially) crystallized inulin juice (i.e., inulin suspension) is defined as the ratio between the crystallization percentage of an inulin juice after a crystallization time $t$ ($IC^t$) to the maximum crystallization percentage of the same inulin juice after a crystallization time of 4 weeks at a temperature of at most 40°C, such as at a temperature of -6°C to 40°C; preferably at a temperature of 0°C to 10°C, more preferably at a temperature of 4°C ($IC^e$). The degree of crystallization (expressed in %) of an inulin juice as taught herein may be calculated by the following equation:

$$DC = 100 \frac{IC^t}{IC^e}$$

wherein:

DC is the degree of crystallisation,
$IC^t$ is the crystallization percentage of an inulin juice after a crystallization time t, and
$IC^e$ is the maximum crystallization percentage of the same inulin juice after a crystallization time of 4 weeks at a temperature of at most 40°C.

**Example 1: Method according to an embodiment of the present invention for storing of an inulin juice**

Chicory roots were harvested during January. After washing with water, they were cut into cossettes and extracted in a counter current diffuser at 70°C. The obtained juice contained about 12% dry matter extract. Solids or flocculated particles were eliminated by filtration with industrial drum rotary filter using diatomaceous earth as filtration aid. The juice was then submitted to an ion exchange step in order to decrease the amount of calcium. After this step, the dry matter content was 11% and the inulin content on dry matter basis (purity P) was estimated to be 90% according to the AOAC 997.08 method.

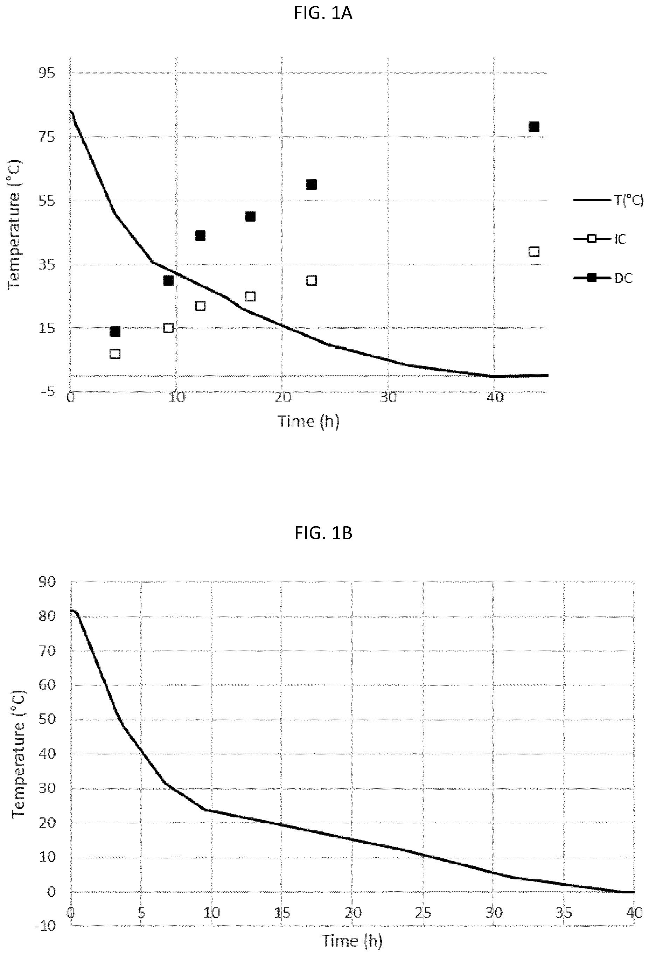

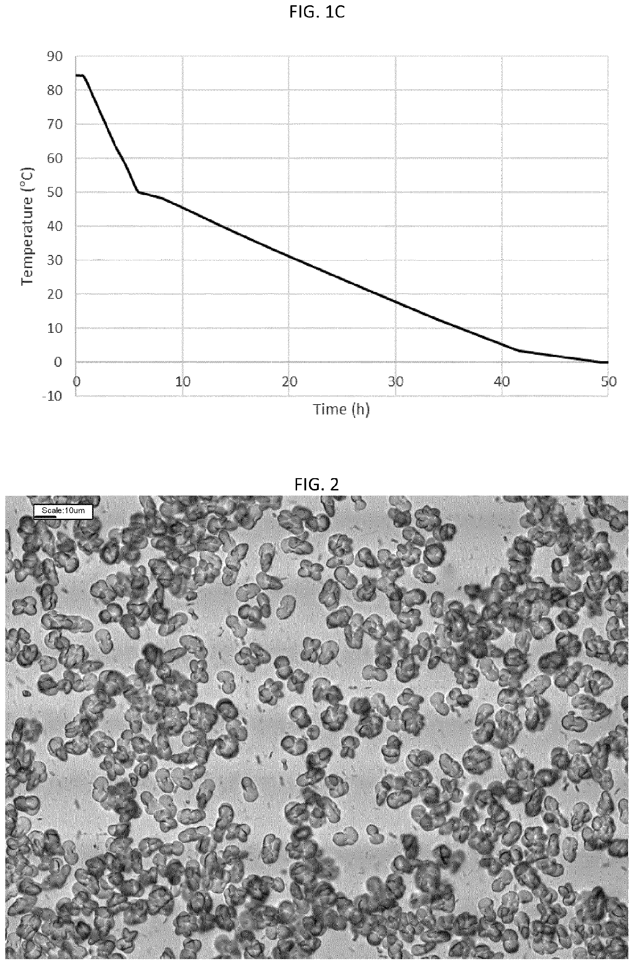

The inulin juice was further concentrated using a falling film evaporator to a dry matter content of 44.2% (B°). A thermal treatment was applied at a temperature of 98°C for 2 minutes. Then the inulin juice (dry matter content of 44.2%) was cooled to 85°C and fed to a jacketed crystallization tank. No cooling was applied during tank filling. Stirring was then applied and the cooling profile as shown in Figure 1A was applied. During cooling, crystallization occurred. Further exemplary cooling profiles useful in the methods as taught herein are illustrated in Figures 1B and 1C.

Samples were taken after 4.25h, 9.25h, 12.25h, 17.0h, 22.75h and 43.75h. After 43.75 h, the temperature was about 0°C. For each sample, the inulin suspension was centrifuged (3000G for 15 minutes) to obtain a clear supernatant. The dry matter content of the supernatant was determined by Brix measurement in the same way as before crystallization, for example using RFM 340 refractometer from Bellingham Stanley.

The percentage of inulin that crystallized ($IC^t$) was determined for each sample according to Method 1. At 43.75h, the $IC^t$ value was 39%. The photograph presented in Figure 2 shows the obtained particles.

The obtained inulin suspension was readily pumpable and was transported to a storage tank for long time storage at 1°C.

After 4 weeks of storage (672 hours), the percentage of inulin that crystallized ($IC^e$) was measured again. The value was 50.0%. The degree of crystallization DC after 43.75h was found to be 100*(39/50) = 78%, as calculated according to Method 2 (Table 1).

Table 1: Results of measurements of B, B°, P, $IC^t$, and degree of crystallization (DC) of an inulin juice during a method of preparation and storage in accordance with an embodiment of the invention

| Time (h) | B (%) | B° (%) | P (%) | $IC^t$ (%) | DC (%) |
|---|---|---|---|---|---|
| 4.25 | 42.7 | 44.2 | 90.0 | 7.0 | 14.0 |
| 9.25 | 40.9 | 44.2 | 90.0 | 15.0 | 30.0 |
| 12.25 | 39.2 | 44.2 | 90.0 | 22.0 | 44.0 |
| 17.0 | 38.5 | 44.2 | 90.0 | 25.0 | 50. |
| 22.75 | 37.2 | 44.2 | 90.0 | 30.0 | 60. |
| 43.75 | 34.6 | 44.2 | 90.0 | 39.0 | 78.0 |
| 672 (4 weeks) | 31.1 | 44.2 | 90.0 | 50.0 ($IC^e$) | 100.0 |

**Example 2: Processing or drying of inulin juice stored by a method according to an embodiment of the invention**

An inulin juice was produced from chicory roots harvested in December using a similar process as the one described in Example 1. The inulin juice contained 11% of free sugars, which was too high with respect to the production of inulin products containing less than 10% of free sugars.

In order to reduce this value of free sugars, 30% (based on dry matter) of an inulin juice prepared and stored in September of the same year according to an embodiment of the method of the invention were mixed with 70% (based on dry matter) of the inulin juice prepared from chicory roots harvested in December.

Table 2: Characteristics of two inulin juices prepared by a method according to an embodiment of the invention and of a mixture of the inulin juices

|  | Chicory harvested in September | Chicory harvested in December | Mix |
|---|---|---|---|
| Free sugars (% of DM) | 5 | 11 | 9.2 |
| Purity (% of DM) | 90 | 89 | 89.3 |
| Inulin (% of DM) | 85 | 78 | 80.1 |
| Dry matter (%) | 40 | 11 | |

The example shows that blending of stored inulin juices prepared with a method according to an embodiment of the invention allowed to normalize the free sugars amount. Table 2 illustrates that the mixed inulin juice complied with the specification of inulin products with respect to free sugar content, i.e., containing less than 10% of free sugars.

## Claims

1. A method for storing an inulin juice, the method comprising the steps of:

   (a) providing an inulin juice at a temperature of about 80°C to about 100°C in a crystallization tank, wherein the inulin juice has a solids content of 20% by weight to 60% by weight, with % by weight based on the total weight of the inulin juice;
   (b) cooling the inulin juice in the crystallization tank to a temperature of at most about 40°C at an average cooling speed of from 0.4°C per hour to 20°C per hour, wherein the inulin juice is subjected to stirring during the cooling step;
   (c) transporting the inulin juice from the crystallization tank to a storage tank; and
   (d) maintaining the inulin juice in the storage tank at a temperature of at most about 40°C.

2. The method according to claim 1, wherein the inulin juice has a solids content of 30% by weight to 50% by weight, with % by weight based on the total weight of the inulin juice; preferably wherein the inulin juice has a solids content of 30% by weight to 45% by weight, with % by weight based on the total weight of the inulin juice.

3. The method according to claim 1 or 2, wherein in step (b) an inulin juice is obtained in which at least 50% of the crystallizable carbohydrates is crystallized.

4. The method according to any one of claims 1 to 3, wherein the inulin juice comprises 60% by weight to 99.5% by weight of inulin, 0% by weight to 25% by weight of free sugars, and 0% by weight to 25% by weight of impurities, with % by weight based on the dry weight of the inulin juice; preferably wherein the inulin juice comprises 70% by weight to 88% by weight of inulin, 3% by weight to 12% by weight of free sugars, and 0% by weight to 17% by weight of impurities, with % by weight based on the dry weight of the inulin juice.

5. The method according to any one of claims 1 to 4, wherein the inulin juice comprises inulin having an average degree of polymerization between 5 and 18.

6. The method according to any one of claims 1 to 5, wherein the inulin juice comprises native inulin.

7. The method according to any one of claims 1 to 6, wherein the inulin juice of step (a) is obtained by a method comprising the steps of:

   - hot water extraction of an inulin containing material such as chicory roots; preferably hot water counter-current diffusion extraction of an inulin containing material; and
- liquid/solid separation of the hot water extract, thereby obtaining an inulin juice; or

wherein the inulin juice of step (a) is obtained by a method comprising the steps of:

(i) hot water extraction of an inulin containing material such as chicory roots; preferably hot water counter-current diffusion extraction of an inulin containing material;
(ii) liquid/solid separation of the hot water extract, thereby obtaining a liquid fraction and a solid fraction;
(iii) demineralization of the liquid fraction of step (ii); and
(iv) activated carbon filtration of the filtrate of step (iii), thereby recovering an inulin juice.

8. The method according to any one of claims 1 to 7, wherein the method comprises the prior step of sterilization of the inulin juice.

9. The method according to any one of claims 1 to 8, wherein the method comprises cooling the inulin juice in a crystallization tank to a temperature of at most about 25°C, at most about 10°C, at most about 8°C, or at most about 5°C; and/or wherein the method comprises cooling the inulin juice in a crystallization tank to a temperature of from about -6°C to about 40°C, such as a temperature of from about -4°C to about 25°C, a temperature of from about 0°C to about 10°C, a temperature of from about 2°C to about 8°C, or a temperature of from about 0.1°C to about 5°C.

10. The method according to any one of claims 1 to 9, wherein the stirring energy is about 0.005 kW/m$^3$ to about 0.5 kW/m$^3$ and/or wherein the stirring speed is 4 rpm to 50 rpm.

11. The method according to any one of claims 1 to 10, wherein the method comprises prior to transport a step of maintaining the inulin juice in the crystallization tank at a temperature of at most about 40°C for 1 hour to 96 hours, such as wherein the method comprises prior to transport a step of maintaining the inulin juice in the crystallization tank at a temperature of from about -6°C to about 40°C for 1 hour to 96 hours.

12. The method according to any one of claims 1 to 11, wherein the method comprises during transport a step of further cooling the inulin juice to a temperature of at most about 10°C, such as wherein the method comprises during transport a step of further cooling the inulin juice to a temperature of from about -6°C to about 10°C, preferably via a heat exchanger.

13. The method according to any one of claims 1 to 12, wherein the inulin juice is maintained in the storage tank for at least one week, such as wherein the inulin juice is maintained in the storage tank for at least one month or for at least six months.

14. The method according to any one of claims 1 to 13, wherein after storage in the storage tank the inulin juice is used for the preparation of one or more of a native inulin product, a long chain inulin product, or a short chain inulin product.

15. The method according to any one of claims 1 to 14, wherein after storage in the storage tank the inulin juice is heated prior to any further processing step.

## FIG. 1A

## FIG. 1B

FIG. 1C

FIG. 2

Europäisches
Patentamt

European
Patent Office

Office européen
des brevets

# EUROPEAN SEARCH REPORT

Application Number

EP 23 16 5162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 107 325 205 A (WUXI QUNSHUO GUTANG BIOTECHNOLOGY CO LTD) 7 November 2017 (2017-11-07) * abstract * * Embodiments 1 to 3 * * claim 1 * ----- | 1-15 | INV. C08B37/00 C08L5/00 |
| A | CN 107 344 972 A (HEILONGJIANG MILITARY GATE MODERN AGRICULTURAL DEV CO LTD) 14 November 2017 (2017-11-14) * abstract * * "Content of the invention" * * Embodiments 1-3 * ----- | 1-15 | |

TECHNICAL FIELDS
SEARCHED      (IPC)

C08B
C08L

The present search report has been drawn up for all claims

| Place of search | Date of completion of the search | Examiner |
|---|---|---|
| Munich | 13 September 2023 | Lartigue, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 5162

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | | Publication date | Patent family member(s) | Publication date |
|---|---|---|---|---|
| CN 107325205 | A | 07-11-2017 | NONE | |
| CN 107344972 | A | 14-11-2017 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDRÉ et al.** *Macromolecules,* 1996, vol. 29, 4626-4635